# DEMANDE DE BREVET EUROPEEN

(11) **EP 2 347 946 A1**
(43) Date de publication de la demande: **27.07.2011**
(21) Numéro de dépôt: 10405016.6
(22) Date de dépôt: 26.01.2010
(51) Int. Cl.: B62H 1/00, B62K 15/00

(54) **Dispositif pour véhicule deux-roues et pliables permettant la stabilisation automatisée et l'assistance au déplacement**

(71) Demandeur: Barro, Michel, 1255 Veyrier (CH)
(72) Inventeur: Barro, Michel, 1255 Veyrier (CH)

(57) **Abrégé**

Dispositif de stabilisation et d'assistance au déplacement de véhicules à deux roues et pliables, comprenant au moins une béquille (1) dont l'extrémité inférieure de son bras (2) peut être équipée d'au moins une roue (3), l'extrémité supérieure dudit bras s'accrochant, principalement et selon chaque modèle de véhicule, à un élément de la structure principale du véhicule, soit la fourche avant et/ou arrière (4) ou dans le cadre, de sorte que, lors du passage d'une position déplié à une position plié du véhicule, ledit élément change substantiellement son angle par rapport au sol, et ,de ce fait, le(s) bras (2) de la(s) béquille(s) adopteront, sans autre manipulation que celle du pliage du véhicule (Fig. 2 et Fig. 4), une position basse et l'angle approprié de sorte que la(es) béquille(s) fassent substantiellement contact avec le sol devenant ainsi un(des) point(s) d'appui supplémentaire du véhicule permettant la stabilisation et, de plus, facilitant le déplacement du véhicule en mode piéton si la(es) béquille(s) est(sont) munie(s) de roue(s).

## Description

La présente invention se rapporte à un dispositif de béquille amovible comportant une mise en place automatique lorsque le véhicule est plié pour stabiliser et/ou déplacer le véhicule comprenant au moins deux roues en ligne, selon les différents modes de réalisation non-limitatifs ci-dessous. On utilisera par la suite le terme véhicule pour désigner un tel véhicule de deux roues en ligne, sans que cela soit limitatif, l'invention pouvant notamment s'appliquer à des véhicules comprenant plus de deux roues en ligne. De même, les termes bicyclette et vélo seront utilisés indistinctement et inclurons aussi les vélomoteurs, scooters et motos.

Des nombreux types de béquilles ont été conçus et avec des différents modes de pliage ou de mise en place. Ces béquilles comportent tous une manipulation de la part de l'usager du véhicule pour leur mise en position utile, soit faire descendre le dispositif vers une position basse afin qu'il se constitue en au moins un point d'appui supplémentaire permettant la stabilisation du véhicule par lui-même. La manipulation traditionnelle consiste à pousser la béquille, normalement avec le pied, soit pour la faire descendre, et inversement, en général, pour la relever vers sa position haute initiale. Il existe encore des béquilles escamotables (WO 2006/000679 A1) comportant un système de mise en place automatique en ce que l'utilisateur doit activer manuellement un dispositif électronique et comportant des moyens de commande et des moyens de transmission de mouvement afin de faire descendre ou relever la béquille. Ce dernier document prévoit aussi la possibilité que la béquille soit munie de roulettes pour faciliter le déplacement du véhicule lorsque le pilote pousse celui-ci en marchant à côté. Là aussi, le dispositif nécessite une activation manuelle de la part de l'usager, tout en restant un dispositif conçu pour être installé sur des véhicules non pliables.

L'évolution constante des designs de vélos, et en particulier, des vélos pliables ainsi que leur adaptation à des exigences, entre outre, de praticité, de manoeuvrabilité et de diminution de leur volumétrie, ainsi qu'un souci de rendre les vélos et leur utilisation plus attractifs encore et, en fin, pour renforcer leur intégration dans les schémas de l'intermodalité des transports et de la mobilité douce sont des éléments qui ont inspirés fortement l'invention objet de cette demande.

Dans ce sens, la présente invention est conçue pour son application à des véhicules pliables dont le roulage, lorsque le véhicule est dans un état plié, est toujours possible ou pas et que son stabilisation est possible, selon sa distribution de poids du véhicule dans un état plié, grâce à l'appui supplémentaire fourni par le dispositif selon invention.

Il est important de noter que, sauf si le contexte exclut cette interprétation, toute référence à un état plié ou replié du véhicule inclut la notion de semi-pliage de celui-ci ou, plus précisément, toute position intermédiaire qu'il peut adopter dans le processus de passage d'une position déplié, dans le sens que le pilote peut rouler normalement sur le véhicule, à une position de pliage totale.

Ainsi, il est connu, notamment des documents EP 0 323 964 B1 et GB 2 021 055 A, des bicyclettes dont les roues s'étendent sensiblement côté à coté lorsque la bicyclette est dans son état plié, et en général, il est nécessaire de la porter, ce qui n'est pas facile notamment en raison du poids du véhicule.

D'autres modèles (WO 2005/092696 A1) permettent le roulage du vélo lorsque celui-ci est dans un état plié, les deux roues s'étendant aussi l'une à coté de l'autre adoptant une position substantiellement parallèle entre elles. Là toujours, la stabilisation du véhicule plié, soit dans un état d'arrêt ou de roulage, doit être assurée par l'usager.

Il est aussi connu (document EP 0 388 540 A1) une bicyclette avec un système de pliage longitudinal dont les roues s'étendent l'une derrière l'autre lorsqu'elle est à l'état replié. Encore dans ce cas, une fois repliée, et compte tenu de la position des éléments du véhicule, le seul moyen de transporter celui-ci dans l'état replié consiste à la porter.

On connait d'ailleurs (voir par exemple EP 1 349 769 B1) d'autres bicyclettes pliables longitudinalement se caractérisant par un système de pliage de sorte qu'une des roues, par exemple celle d'arrière, est mobile entre une position écartée et une position rapprochée de l'autre roue réduisant ainsi l'empattement du véhicule tout en maintenant les roues avant et arrière dans le plan du véhicule de telle manière que celui-ci soit susceptible de rouler et d'être dirigé par un utilisateur poussant le vélo à ses côtés. L'empattement réduit du véhicule ainsi replié permet l'utilisateur de s'introduire plus facilement dans des lieux piétonniers en poussant son véhicule, et ceci en mitigeant des possibles gênes aux autres personnes présentes dans ce lieu. Toutefois, là encore, l'utilisateur doit soit maintenir l'équilibre de la bicyclette pour la déplacer en mode piéton soit activer manuellement une béquille traditionnelle ou d'autre type connu afin de stabiliser le véhicule.

Il est aussi connu (EP 0 026 800 B1) un modèle de vélo dont le design particulier du cadre arrière ainsi que son type spécifique d'accrochage du cadre arrière au reste de la bicyclette comportant un seul point de connexion pivotant permettent la stabilisation et le roulage du véhicule dans un état semi-plié de sorte que le cadre arrière, où la roue arrière est installée, est muni d'un porte-bagages avec des roulettes, situé en dessus de la roue arrière lorsque la bicyclette est en état dépliée, qui adopte une position substantiellement inverse dans un état semi-plié lorsque on fait pivoter le cadre arrière dans l'axe longitudinal de la bicyclette autour du point d'accrochage pivotant ce qui permet l'appui du porte-bagage à roulettes sur le sol. Toutefois, cette solution reste spécifique audit modèle selon son particulier mode de pliage et de la structure du cadre arrière ne permettant pas son application à la généralité de types de bicyclettes pliables connus.

Le but de l'invention est de proposer un dispositif comportant au moins une béquille utilisable selon les exemples non-limitatifs suivants : i) dans les cas où le véhicule ne peut pas être roulé lorsqu'il est dans un état plié, l'installation du dispositif selon l'invention permet la stabilisation du véhicule lorsque celui-ci est dans un état plié libérant ainsi l'utilisateur de ne pas devoir maintenir par lui-même l'équilibre du véhicule et, ii) dans les cas où le véhicule peut être roulé en position plié, l'installation du dispositif selon l'invention permet d'une part, la stabilisation du véhicule et en plus, d'autre part et en même temps, de le faire rouler avec plus d'aisance, si la la(es) béquille(s) sont munies de roues.

Selon l'invention, un tel dispositif de béquille (1) pour véhicule deux-roues comprend au moins un bras amovible (2) et accroché au véhicule par son extrémité supérieure (4) à n'importe quel endroit du véhicule et ceci selon chaque modèle de véhicule, notamment dans la fourche avant et/ou arrière ou dans le cadre central, ledit bras pouvant comprendre une roue (3) au moins installée à une extrémité distante du point d'accrochage et disposé de sorte que, lors qu'on replie le véhicule, l'angle du bras de la béquille par rapport au sol suit substantiellement le changement d'angle que l'élément du véhicule (par exemple la fourche arrière) auquel la béquille est accrochée subit lorsque le véhicule passe d'un état déplié à un état replié, ce changement d'angle automatique impliquant que la(es) béquille(s) adopte(nt) ainsi une position suffisamment basse se constituant en un nouveau point d'appui du véhicule, en amont des roues principales. Si la(s) béquille(s) sont munies de roues, c'est sont ces derniers qui rentrent en contact avec le sol.

De ce fait, le véhicule en mode plié est d'une part stable grâce à l'appui obtenu par la(es) béquille(s) et, d'autre part, roule sur ses roues principales (roue avant et/ou) roue arrière, selon chaque modèle de vélo) aussi comme sur la(es) roue(s) de la béquille(s) si cette dernière est ainsi équipée.

Le dispositif peut aussi comprendre des moyens de montage sur un véhicule existant.

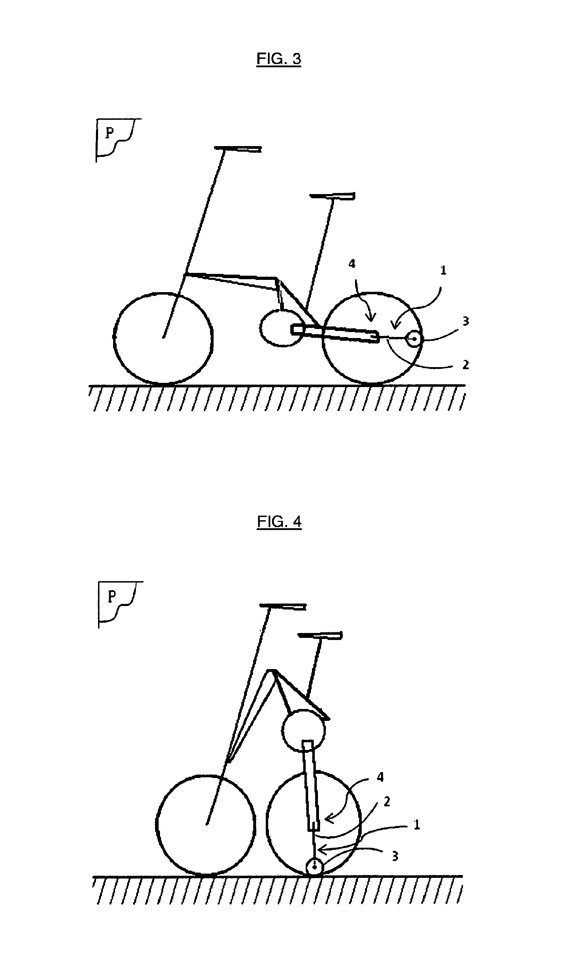

De préférence, un dispositif selon l'invention comprend deux bras ayant la possibilité de comprendre chacun au moins une roue, les bras disposés de part et d'autre d'un plan de symétrie longitudinale du véhicule, permettant un équilibre hyperstatique de ce dernier dans un état plié. Il est important de noter qu'un tel dispositif est particulièrement adapté à être monté sur une bicyclette pliable dont les roues principales restent sur le même plan (P) (Fig. 4) lorsque le véhicule est plié (ceci n'étant pas une exigence), le point, la position, et l'angle d'accrochage au véhicule dépendant de chaque modèle mais de préférence dans la fourche avant ou arrière et à l'hauteur de l'axe de la roue principale (avant ou arrière), et que son guidage est toujours possible aux moyens du guidon du véhicule permettant le déplacement de celui-ci en mode piéton lorsqu'il est dans un état plié.

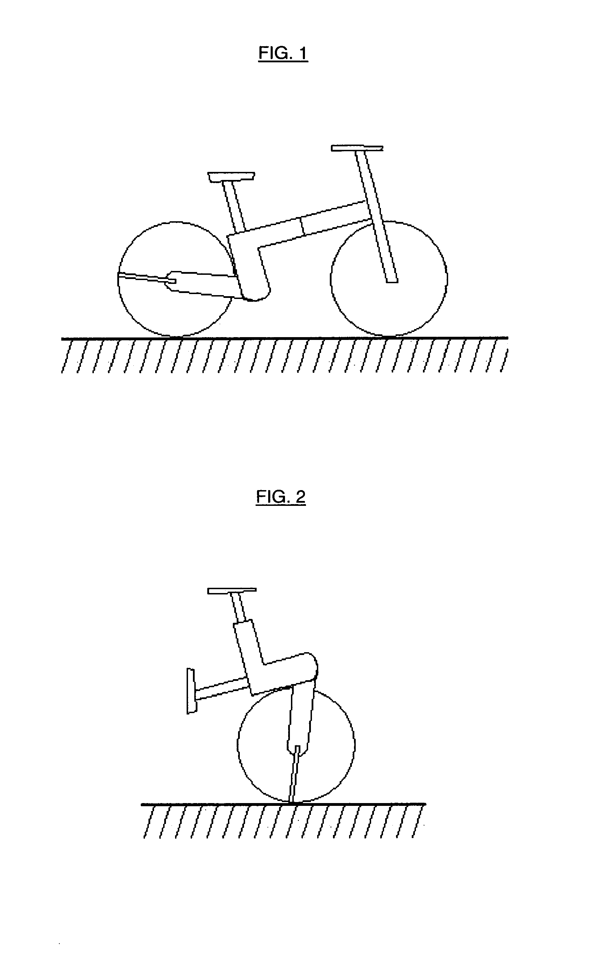

L'invention peut aussi être utilisée pour un véhicule dont lorsqu'il est en état plié seulement une des roues principales du véhicule maintien le contact avec le sol, l'autre roue restant sensiblement surélevée par rapport au sol et à sa position initial en mode déplié de sorte que l'stabilité et le roulage du véhicule est assurée par ladite roue principale (avant ou arrière) qui reste en contact avec le sol ensemble avec la(es) roue(s) de(s) la béquille(s), comme le montre les Figures 2 et 4

Ce dispositif se distingue des précédents notamment en ce qu'il ne nécessite pas d'une manipulation quelconque pour l'activer. Le pilote n'a plus à mettre en position de travail le dispositif ni à le déclencher par un geste quelconque sur le dispositif. Il ne suffit que l'utilisateur replie le véhicule pour que le dispositif adopte de manière immédiate une position basse et déploie sa fonction de stabilisation, soit pour déplacer le véhicule ou pas.

Dans le cas où la béquille est munie de roues, le dispositif peut aussi être muni d'un système de blocage des roues de la béquille qui pourrait être activé ou désactivé par l'utilisateur à volonté, notamment si les conditions du terrain sur lequel se trouve le véhicule le conseille, par exemple en cas de pente.

Par ailleurs on peut équiper la béquille avec d'autres éléments ou fonctions supplémentaires comme des moyens de suspension, par exemple des amortisseurs ou de dispositifs émetteurs de lumières ou des réfracteurs.

L'invention s'étend aussi à un véhicule comprenant un dispositif de béquille à roues selon l'invention.

Les avantages de ce dispositif:
- Il libère le pilote des efforts considérables pour soutenir le véhicule en mode piéton lorsque le véhicule est dans un état plié. De ce fait, il procure au pilote un repos nerveux et musculaire notable.
- Le dispositif permet au pilote de déplacer le véhicule avec plus d'aisance et de stabilité, tout en minimisant l'encombrement qui trouve normalement l'utilisateur pour déplacer le véhicule en supportant en même temps le poids et en devant garantir par lui-même la stabilité.
- Comme dans le cas d'une béquille traditionnelle, le dispositif libère le pilote de devoir trouver un point d'appui extérieur pour garer le véhicule mais il lui permet aussi de l'amener avec lui plus facilement par exemple à l'intérieur d'un bâtiment (domicile, bureau, magasin, gare, aéroport, etc.) ou dans les transports publics (bus, tram, métro, train, bateaux, etc.) au lieu de le garer à l'extérieur, se séparer de lui et le récupérer après, ce qui diminue aussi des risques comme le vol ou les actes de vandalisme.
- On remarque aussi que, il est de grande utilité et procure une agréable sensation pouvoir rouler le vélo à côté de soi lorsque celui-ci est dans un état plié et sans devoir le transporter en supportant son poids ou devant assurer son stabilité.
- Un vélo pliable équipé avec le dispositif incite l'utilisateur à plier son véhicule au lieu de mettre en place manuellement une béquille conventionnelle pour le garer et, si le dispositif est muni de roues, à évoluer aisément avec le véhicule, sans trop d'encombrement pour le pilote et le reste de piétons, lorsque celui-ci est dans un état plié. De ce fait, même si le dispositif est compatible avec l'installation d'une béquille traditionnelle (pour l'utiliser lorsque le vélo déplié), il peut bien la substituer pour autant qu'on plie le vélo pour le garer.
- En cas de dégonflement du pneumatique principale pour une raison quelconque, par exemple par une crevaison, le dispositif trouve aussi son utilité en ce que les béquilles vont substituer ledit pneu pour d'abord supporter le poids du véhicule lorsqu'il est dans un état plié et, si des roues de béquille sont installées, pour le roulage du véhicule dans ledit état tout en minimisant et même éliminant certains effets négatifs qui comporte le roulage d'un véhicule avec un pneu dégonflé tels qu'une résistance accrue au roulement ainsi que l'usure et les possibles dégâts que le pneu dégonflé/crevé ou les différents éléments de la roue concernée pourraient subir dans cette situation.
- En fin, l'adjonction sur une bicyclette existante ou la fourniture par le fabricant de ce dispositif n'augmente pas beaucoup le poids de celle-là ni son prix.

Les dessins annexés montrent des exemples non limitatifs du dispositif selon l'invention et de son installation sur un véhicule pliable:
La Figure 1 est une vue de profil schématique d'une bicyclette pliable, avec un système de pliage type charnière, dans un état déplié comprenant un premier mode de réalisation pour un dispositif selon l'invention dans une position haute.
La Figure 2 est une vue analogue à la Figure 1 lorsque la bicyclette est dans un état plié et le dispositif selon l'invention dans une position basse.
La Figure 3 est une vue de profil schématique d'une bicyclette pliable de manière longitudinale dans un état déplié comprenant un deuxième mode de réalisation pour un dispositif selon l'invention dans une position haute.
La Figure 4 est une vue analogue à la Figure 3 lorsque la bicyclette est dans un état plié et le dispositif selon l'invention dans une position basse.

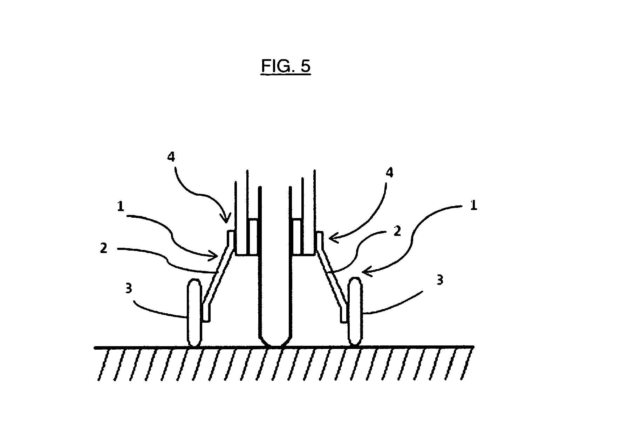

La Figure 5 est une vue de détail depuis le coté arrière de la bicyclette en état plié selon la Figure 4.

## Revendications

1. Dispositif de béquille (1) pour véhicule deux-roues pliable comprenant un bras (2) amovible accroché principalement à la fourche arrière (4) et à l'auteur de l'axe de la roue arrière ou, en général aussi apte pour s'accrocher à tout autre élément du véhicule selon la position que ledit élément adopte lorsque le véhicule est dans un état plié, de sorte que dès qu'on plie le véhicule, ladite béquille adopte de manière immédiate une position basse lui permettant d'entrer en contact avec le sol.

2. Dispositif selon la revendication 1 **caractérisé en ce qu'**il comprend deux bras ou plus.

3. Dispositif selon les revendications 1 et 2 en ce que les bras sont de part et d'autre du véhicule.

4. Dispositif selon les revendications 1 et 2 en ce que les bras sont du même coté du véhicule

5. Dispositif selon les revendications 1 à 4 **caractérise en ce qu'**il comprend une roue (3) ou plus disposées à une extrémité distante du point d'accrochage de la béquille au véhicule.

6. Dispositif selon les revendications 1 à 5 **caractérisé en ce que** les roues de la béquille soient munies d'un dispositif de blocage de roues.

7. Dispositif selon la revendication 1 à 6 **caractérisé en ce que** la béquille et/ou les roues soient munies de moyens de suspension.

8. Dispositif selon la revendication 1 à 7 **caractérisé en ce qu'**un ou plusieurs éléments de la béquille ou les roues soient munies de dispositifs émetteurs de lumières ou réfracteurs.

9. Dispositif selon les revendications 1 à 8 **caractérisé en ce qu'**il comporte des moyens de montage sur un véhicule existant.

10. Véhicule comprenant un dispositif de béquille selon l'une des revendications 1 à 9.
